# EUROPÄISCHE PATENTSCHRIFT

(11) **EP 2 308 345 B1**
(45) Veröffentlichungstag und Bekanntmachung des Hinweises auf die Patenterteilung: **04.12.2013**
(21) Anmeldenummer: 10176911.5
(22) Anmeldetag: 15.09.2010
(51) Int. Cl.: A47C 4/02, A47C 4/03, A47B 13/00, A47C 7/00, A47C 9/00, F16B 12/20, F16B 12/32

(54) **Verbindungssystem**
Connection system
Système de connexion

(30) Priorität: 15.09.2009 DE 102009041775
(43) Veröffentlichungstag der Anmeldung: 13.04.2011
(73) Patentinhaber: Tietz, Egon, 14089 Berlin (DE)
(72) Erfinder: Tietz, Egon, 14089 Berlin (DE)
(74) Vertreter: Gulde Hengelhaupt Ziebig & Schneider

(56) Entgegenhaltungen:
- FR-A- 1 236 664
- FR-A- 1 242 830
- FR-A5- 2 208 290
- GB-A- 2 032 041
- US-A- 3 995 716
- US-A- 4 998 631

## Beschreibung

Die Erfindung betrifft ein Verbindungssystem, welches integriert in den verschiedensten Anwendungen, beispielsweise in Möbelstücken, eine Montage oder Demontage dieser, ohne Hilfsmittel ermöglicht.

Bekannt sind Verbindungsmöglichkeiten wie Schrauben, Nageln oder Kleben, mit denen Bauteile zu Baugruppen verbunden werden können. Nachteilig bei dieser Art der Verbindungen ist, dass zur Erzeugung Werkzeuge bzw. Hilfsstoffe benötigt werden. Die Montage erfordert neben einem gewissen Geschick viel Zeit und Aufwand und ist teilweise mit erheblichen Geräuschemissionen verbunden. Zudem sind diese Verbindungen gar nicht oder nicht vollständig reversibel, es bleiben in den meisten Fällen zumindest Löcher der Nägel oder Schrauben zurück. Klebeverbindungen sind in der Regel nicht lösbar.

Auch reversible Systeme sind bekannt. So gibt es bei Möbeln ein System aus Dübeln, Stiften und exzentrischen Muttern, um einzelne Möbelbretter rechtwinklig miteinander zu verbinden. Allerdings erfordern diese eine Vielzahl von zusätzlichen Teilen und auch den Gebrauch von Werkzeugen.

Aus der FR 1 242 830 A geht ein zerlegbarer Aufsteller für Tafeln oder Anzeigen hervor, der klein verpackbar und damit leicht zu transportieren und einfach zu montieren sein soll. Dazu weist er vier zusammensteckbare Einzelelemente auf.

Der Erfindung liegt demnach die Aufgabe zugrunde, ein Verbindungssystem bereitzustellen, welches die oben genannten Nachteile vermeidet und für die vielfältigsten Gebrauchsgüter verwendet werden kann.

Gelöst wird diese Aufgabe mit einem Verbindungssystem mit den in Anspruch 1 genannten Merkmalen, einer Leiter mit den in Anspruch 4 genannten Merkmalen, einem Sitz mit den in Anspruch 7 genannten Merkmalen, einem Hocker mit den in Anspruch 10 genannten Merkmalen, einem Tisch mit den in Anspruch 12 genannten Merkmalen, einer Garderobe mit den in Anspruch 14 genannten Merkmalen und einem Behältnis mit den in Anspruch 15 genannten Merkmalen.

Das erfindungsgemäße Verbindungssystem weist wenigstens zwei Tragelemente, wenigstens ein im Wesentlichen orthogonal zu den Tragelementen und zwischen den Tragelementen angeordnetes Stützelement und wenigstens einen im Wesentlichen parallel zu dem Stützelement und um die Tragelemente herum angeordneten Spannring auf, wobei die Tragelemente und das Stützelement und der Spannring in der Weise miteinander verbunden sind, dass zumindest eines der Tragelemente und/oder das Stützelement elastisch verformt ist und damit eine Vorspannung auf das Verbindungssystem ausgeübt ist und das Verbindungssystem gegen ein Verschieben der Tragelemente und des Stützelements und des Spannrings gegeneinander gehemmt ist.

Hiermit ist es vorteilhaft möglich, Bauteile ohne Werkzeuge, Hilfsmittel oder Hilfsstoffe zu einer dauerhaft haltbaren Baugruppe zu montieren. Ebenso ist die Demontage dieser Baugruppe ohne Werkzeuge, Hilfsmittel oder Hilfsstoffe möglich. Baugruppen können so für einen Transport platzsparend zerlegt und am Einsatzort leicht und schnell wieder aufgebaut werden. Das erfindungsgemäße Verbindungssystem lässt sich bei der Konstruktion vieler Gegenstände, beispielsweise Möbeln, integrieren.

Auch ist es möglich mit dem erfindungsgemäßen Verbindungssystem ein Baukastensystem zu erstellen, in dem einzelne Teile bei verschiedenen Baugruppen eingesetzt werden. So kann beispielsweise das Spannelement in ein und der selben Ausgestaltung für einen Hocker, eine Garderobe oder eine Truhe eingesetzt werden. Das verringert bei der Herstellung die Anzahl der verschiedenen Teile und spart so Kosten. In der Anwendung vereinfacht es die Montage erheblich.

In bevorzugter Ausgestaltung der Erfindung ist vorgesehen, dass die Tragelemente Aussparungen zur Aufnahme des Stützelements und/oder des Spannrings aufweisen, und/oder das Stützelement und/oder der Spannring Aussparungen zur Aufnahme der Tragelemente aufweisen.

Hierdurch ist die Positionierung der einzelnen Bauteile zueinander vorteilhaft erleichtert. Zudem können so formschlüssige Verbindungen erzeugt werden, mittels derer das erfindungsgemäße Verbindungssystem höheren Belastungen gewachsen ist. In weiterer bevorzugter Ausgestaltung der Erfindung ist vorgesehen, dass der Spannring ein Metallring ist und das Stützelement aus Holz ist.

Durch die Ausgestaltung des Spannelements aus Metall besitzt es vorteilhaft eine für die Anwendung günstige Nachgiebigkeit und gute Dauerelastizität. Damit ist die Funktion auch nach vielen Montagen und Demontagen gewährleistet. Die Ausgestaltung des Stützelements aus Holz garantiert eine hohe Steifigkeit.

Beispielsweise Möbel bestehen oft aus Kombinationen aus Holz und Metall. Das erfindungsgemäße Verbindungssystem lässt sich durch den Einsatz dieser Materialien auch ästhetisch vorteilhaft gut in diese Umgebung integrieren. Funktionalität wird so mit einem guten Erscheinungsbild verbunden.

Weiterhin wird die Aufgabe durch eine Leiter mit den in Anspruch 4 genannten Merkmalen gelöst.

Die erfindungsgemäße Leiter weist ein erfindungsgemäßes Verbindungssystem auf, wobei zwei Leiterholme die Tragelemente sind und wenigstens eine Leitersprosse das Stützelement ist.

Hiermit ist es vorteilhaft möglich eine sichere, stabile Leiter zu erzeugen, welche bei Nichtgebrauch demontiert und platzgünstig verstaut werden kann.

In bevorzugter Ausgestaltung der Erfindung ist vorgesehen, dass die wenigstens eine Leitersprosse spiegelsymmetrisch an zwei gegenüberliegenden Stirnseiten v-förmig ausgestaltet sind.

Mit der Spiegelsymmetrischen Ausgestaltung wird vorteilhaft die Möglichkeit eines falschen Zusammenbauens vermieden. Die Leitersprosse kann in zwei Positionen eingebaut werden. Es wird nicht in Ober- oder Unterseite unterschieden. Die V-Form ermöglicht die Spiegelsymmetrie.

In weiterer bevorzugter Ausgestaltung der Erfindung ist vorgesehen, dass die zwei Leiterholme innere Aussparungen zur Aufnahme der Leitersprosse und äußere Aussparungen zur Aufnahme des Spannrings aufweisen, wobei die innere Aussparung einer der Leiterholme so gestaltet ist, dass die Leitersprosse nur im wesentlichen orthogonal zu den Leiterholmen in die innere Aussparung einbringbar ist und die innere Aussparung des anderen der Leiterholme so gestaltet ist, dass die Leitersprosse in einem Winkel bis etwa 45 Grad in die innere Aussparung einbringbar ist.

Hierdurch ist es vorteilhaft möglich die Leiter mit geringen Kraftaufwand zu montieren. Die Leitersprosse kann so mit einer Bewegung eingebaut werden, welche durch ein Auftreten auf die Leitersprosse ebenfalls realisiert wird. Das Körpergewicht kann somit bei einer Montage der Leiter genutzt werden. Zur Demontage muss die Leiter nur auf den Kopf gestellt und der Vorgang wiederholt werden.

Weiterhin wird die Aufgabe durch einen Sitz mit den in Anspruch 7 genannten Merkmalen gelöst.

Der erfindungsgemäße Sitz weist ein erfindungsgemäßes Verbindungssystem auf, wobei zwei Sitzkufen die Tragelemente sind und wenigstens eine Sitzquerstrebe das Stützelement ist.

Hiermit ist es vorteilhaft möglich einen stabilen Sitz aus wenigen Einzelteilen zu erzeugen. Zudem kann eine andere Sitzhöhe leicht durch einen Austausch nur der Sitzkufen erfolgen. Sitze in unterschiedlichen Größen und Ausgestaltungen können so mit wenigen unterschiedlichen Bauteilen erzeugt werden. Das spart Kosten. Grade bei im Wachstum befindlichen Kindern ist so nicht mehrmals der Austausch des kompletten Sitzes nötig. Auch einzelne beschädigte Bauteile führen so nicht zwangsläufig zum Neukauf des kompletten Sitzes. Diese Vorteile machen den erfindungsgemäßen Sitz gerade für Einrichtungen interessant, in denen sich viele Kinder aufhalten, wie beispielsweise Schulen und Kindergärten.

In bevorzugter Ausgestaltung der Erfindung ist vorgesehen, dass der Sitz Federbügel aufweist, an denen eine Sitzschale befestigt ist. Hierdurch ist es vorteilhaft möglich den Sitz besonders ergonomisch auszugestalten. Durch eine federnd gelagerte Sitzfläche wird der Körper und insbesondere der Rücken eines Benutzers nicht statisch und damit schädigend beansprucht. Mit einer schwingbaren Sitzfläche wird der Rücken wechselnd beansprucht und die Rückenmuskeln werden zur Unterstützung des Skeletts trainiert.

In weiterer bevorzugter Ausgestaltung der Erfindung ist vorgesehen, dass die Federbügel aus Metall sind. Durch die Ausgestaltung der Federbügel aus Metall weisen diese vorteilhaft eine für die Anwendung günstige Nachgiebigkeit und gute Dauerelastizität auf. Damit ist die Funktion auch nach vielen Montagen und Demontagen gewährleistet.

Weiterhin wird die Aufgabe durch einen Hocker mit den in Anspruch 10 genannten Merkmalen gelöst.

Der erfindungsgemäße Hocker weist ein erfindungsgemäßes Verbindungssystem auf, wobei wenigstens drei Hockerbeine die Tragelemente sind und wenigstens ein Hockerquerteil das Stützelement ist.

Hierdurch ist es vorteilhaft möglich kostengünstig aus wenigen Bauteilen einen Hocker zum Zusammenbau ohne Werkzeuge, Hilfsmittel oder Hilfsstoffe zu erzeugen. Selbst zusammenbaubare Möbel sind leichter zu transportieren und Aufzubauen und erleichtern damit erheblich den Alltag, gerade bei Umzügen oder Neueinrichtungen.

In bevorzugter Ausgestaltung der Erfindung ist vorgesehen, dass das Hockerquerteil und/oder der Spannring in einer Hockerplatte integriert ist. Dadurch wird vorteilhaft die Anzahl der Bauteile verringert.

Weiterhin gelöst wird die Aufgabe durch einen Tisch mit den in Anspruch 12 genannten Merkmalen.

Der erfindungsgemäße Tisch weist ein erfindungsgemäßes Verbindungssystem auf, wobei wenigstens drei Tischbeine die Tragelemente sind und wenigstens eine Tischquerstrebe das Stützelement ist.

Hierdurch ist es vorteilhaft möglich kostengünstig aus wenigen Bauteilen einen Tisch zum Zusammenbau ohne Werkzeuge, Hilfsmittel oder Hilfsstoffe zu erzeugen.

In bevorzugter Ausgestaltung der Erfindung ist vorgesehen, dass die Tischquerstrebe und/oder der Spannring in einer Tischplatte integriert ist. Dadurch wird vorteilhaft die Anzahl der Bauteile verringert.

Weiterhin wird die Aufgabe durch eine Garderobe mit den in Anspruch 14 genannten Merkmalen gelöst.

Die erfindungsgemäße Garderobe weist ein erfindungsgemäßes Verbindungssystem auf, wobei wenigstens drei Garderobenbeine die Tragelemente sind und wenigstens eine Garderobenquerstrebe das Stützelement ist.

Hierdurch ist es vorteilhaft möglich kostengünstig aus wenigen Bauteilen eine Garderobe zum Zusammenbau ohne Werkzeuge, Hilfsmittel oder Hilfsstoffe zu erzeugen.

Weiterhin wird die Aufgabe durch ein Behältnis mit den in Anspruch 15 genannten Merkmalen gelöst.

Das erfindungsgemäße Behältnis weist ein erfindungsgemäßes Verbindungssystem auf, wobei wenigstens zwei Seitenteile die Tragelemente sind und wenigstens ein Behältnisquerteil das Stützelement ist.

Hierdurch ist es vorteilhaft möglich kostengünstig aus wenigen Bauteilen ein Behältnis zum Zusammenbau ohne Werkzeuge, Hilfsmittel oder Hilfsstoffe zu erzeugen.

Weitere bevorzugte Ausgestaltungen der Erfindung ergeben sich aus den übrigen, in den Unteransprüchen genannten Merkmalen.

Die Erfindung wird nachfolgend in Ausführungsbeispielen anhand der zugehörigen Zeichnungen erläutert. Es zeigen:
- Figur 1: eine Prinzipskizze eines erfindungsgemäßen Verbindungssystems;
- Figur 2: eine Prinzipskizze eines weiteren erfindungsgemäßen Verbindungs-systems;
- Figur 3: ein erfindungsgemäßes Verbindungssystem an einer Leiter;
- Figur 4: ein Detail der Leiter in einer Draufsicht;
- Figur 5: das Detail der Leiter in einer Seitenansicht;
- Figur 6: das Detail der Leiter in einer weiteren Seitenansicht;
- Figur 7: eine Veranschaulichung eines Montagevorganges der Leiter;
- Figur 8: ein erfindungsgemäßes Verbindungssystem an einem Sitz;
- Figur 9: eine Veranschaulichung eines Montagevorganges des Sitzes in Rückansicht;
- Figur 10: eine Veranschaulichung eines Montagevorganges des Sitzes in Seitenansicht;
- Figur 11: eine Detaildarstellung des Sitzes in einer Seitenansicht;
- Figur 12: eine Detaildarstellung des Sitzes in einer Draufsicht;
- Figur 13: ein erfindungsgemäßes Verbindungssystem an einem Hockers in einer Schnittdarstellung;
- Figur 14: ein erfindungsgemäßes Verbindungssystem an einem Tisch in einer Schnittdarstellung;
- Figur 15: ein erfindungsgemäßes Verbindungssystem an einem Garderobenständer in einer Schnittdarstellung;
- Figur 16: ein erfindungsgemäßes Verbindungssystem an einem Behältnis in einer Explosionsdarstellung und
- Figur 17: ein Detail des Behältnisses.

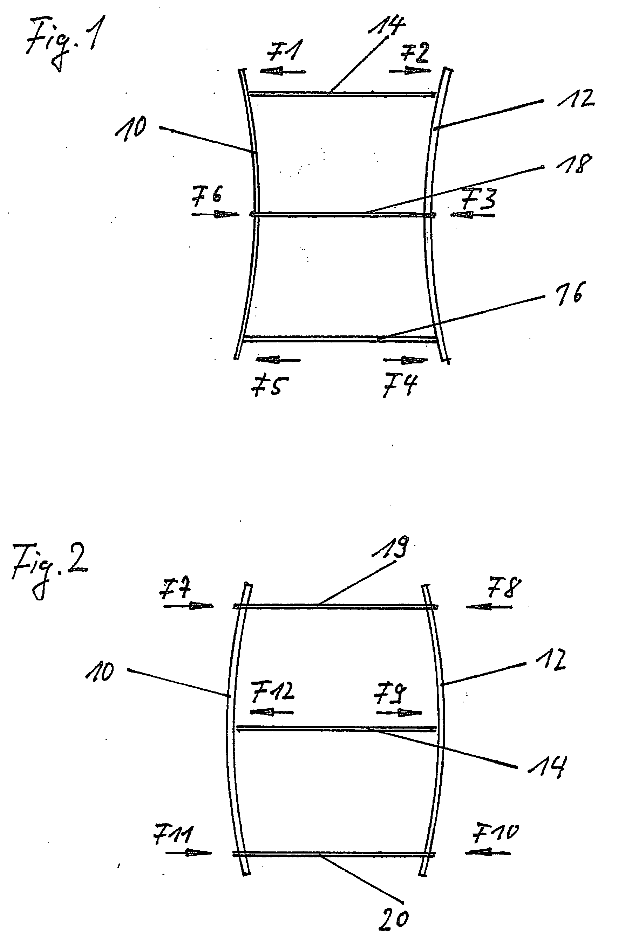

In Figur 1 und Figur 2 sind zwei Beispiele des erfindungsgemäßen Verbindungssystems skizziert. Es werden jeweils zwei Tragelemente 10 und 12 mittels Stützelementen 14;16 und Spannringen 18;20 zueinander ortsfest angeordnet. Die in Figur 1 dargestellte Baugruppe umfasst dazu folgende Bauteile: zwei Tragelemente 10 und 12, orthogonal dazu zwei Stützelemente 14 und 16 und einen Spannring 18. Die in Figur 2 dargestellte Baugruppe umfasst zwei Tragelemente 10 und 12, orthogonal dazu ein Stützelement 14 und zwei Spannringe 18 und 20.

In Figur 1 wirken an den Tragelementen 10 und 12 die Kräfte F1 bis F6. Dabei wirken am ersten Tragelement 10 die in der Figur nach links gerichteten Kräfte F1 im oberen Bereich und F5 im unteren Bereich und die nach rechts gerichtete Kraft F6 im mittleren Bereich. Am zweiten Tragelement 12 wirken die nach rechts gerichteten Kräfte F2 im oberen Bereich und F4 im unteren Bereich und die nach links gerichtete Kraft F3 im mittleren Bereich.

In Figur 2 wirken an den Tragelementen 10 und 12 die Kräfte F7 bis F12. Dabei wirken am ersten Tragelement 10 die in der Figur nach rechts gerichteten Kräfte F7 im oberen Bereich und F11 im unteren Bereich und die nach links gerichtete Kraft F12 im mittleren Bereich. Am zweiten Tragelement 12 wirken die nach links gerichteten Kräfte F8 im oberen Bereich und F10 im unteren Bereich und die nach rechts gerichtete Kraft F9 im mittleren Bereich.

Verursacht werden die an den Tragelementen 10 und 12 wirkenden Kräfte durch die Spannringe und Stützelemente 14;16 und 18;20 , die so beschaffen sind, dass ohne eine Nachgiebigkeit wenigstens eines der Bauteile, also eines Tragelements 10;12 oder eines Stützelements 14;16, keine Montage möglich wäre.

Die Spannringe 18;20 sind hier als solche definiert, die vorwiegend auf Zug belastet sind und Stützelemente 14;16 als solche, die vorwiegend auf Drück belastet sind.

In den Beispielen der Figuren 1 und 2 sind die Stützelemente und Spannringe 14;16 und 18;20 beabstandet zueinander angeordnet. So wirken auf die Tragelemente 10 und 12 Biegemomente, die der Baugruppe aus Figur 1 aufgrund der Nachgiebigkeit der Tragelemente bei vergrößert dargestellter Verformung eine konkave Form und der Baugruppe aus Figur 2 bei vergrößert dargestellter Verformung eine konvexe Form verleihen. Durch die hier verursachte elastische Verformung der Tragelemente 10 und 12 befinden sich die abgebildeten Baugruppen in einem vorgespannten Zustand, der einem Lösen der Verbindungen hemmend entgegenwirkt.

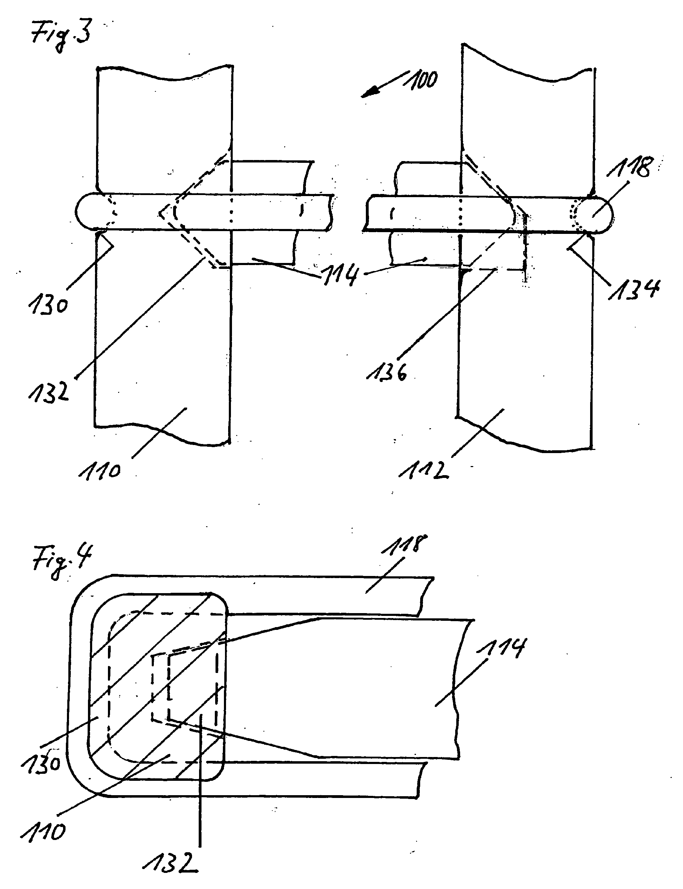

Ebenso kann erfindungsgemäß auch wenigstens ein Stützelement 14;16 durch Verformung im elastischen Bereich für eine Vorspannung der Verbindungen sorgen. Welches der Bauteile sich verformt, ist abhängig von den Steifigkeitswerten dieser, die bestimmt werden durch die Konstruktion und das Material der Bauteile. Erfindungsgemäß ist es auch möglich einen Spannring und ein Stützelement in der selben Ebene der Tragelemente anzuordnen. So ist in Figur 3 ein Abschnitt einer ohne Hilfsmittel zusammenbaubaren Leiter 100 dargestellt, bei der eine Leitersprosse 114 das Stützelement und ein Leiter-Spannring 118 den Spannring darstellt. Als erstes Tragelement dient hier der linke Leiterholm110, als zweites Tragelement der rechte Leiterholm 112.

Die Leiterholme 110;112 sind zusätzlich mit Einkerbungen bzw. Aussparungen versehen. So besitzen der linke und der rechte Leiterholm 110 und 112 jeweils äußere und innere Aussparungen 130;134 und 132;136. Die äußeren Aussparungen 130;134 dienen der Positionierung des Leiter-Spannrings 118. Die inneren Aussparungen 132;136 geben die Position der Leitersprosse 114 vor und stellen zudem eine formschlüssige Verbindung in vertikaler Richtung her, sodass ein sicherer Halt der Leitersprosse 114 bei Benutzung der Leiter 100 gewährleistet ist.

Figur 4 zeigt eine Draufsicht auf den linken Leiterholm 110 mit der u-förmigen äußeren Aussparung 130, in der der Leiter-Spannring 118 angeordnet ist, und der inneren Aussparung 132, in die die Leitersprosse 114 ragt. In der abgebildeten Ausführung nimmt die innere Aussparung 132 nicht die gesamte Breite des Leiterholms 110 ein. Die Leitersprosse 114 ist mit ihrem dem Leiterholm 110 zugewandten Ende entsprechend ausgestaltet, wobei die Leitersprosse 114 spiegelsymmetrisch gestaltet ist. Dadurch ist ein Einbau der Leitersprosse 114 in zwei Positionen möglich und der Einbau in einer verkehrten Position ausgeschlossen.

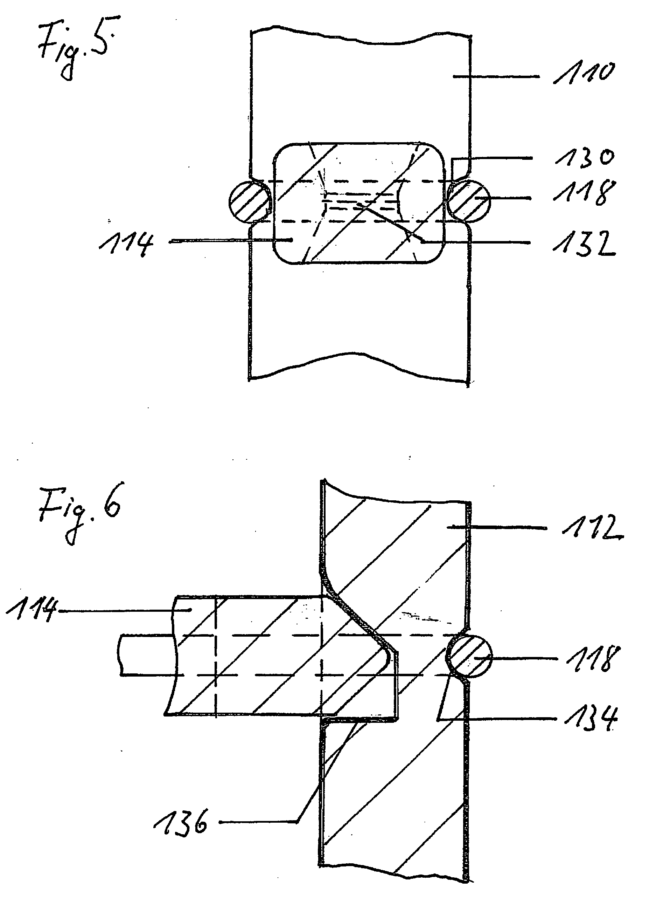

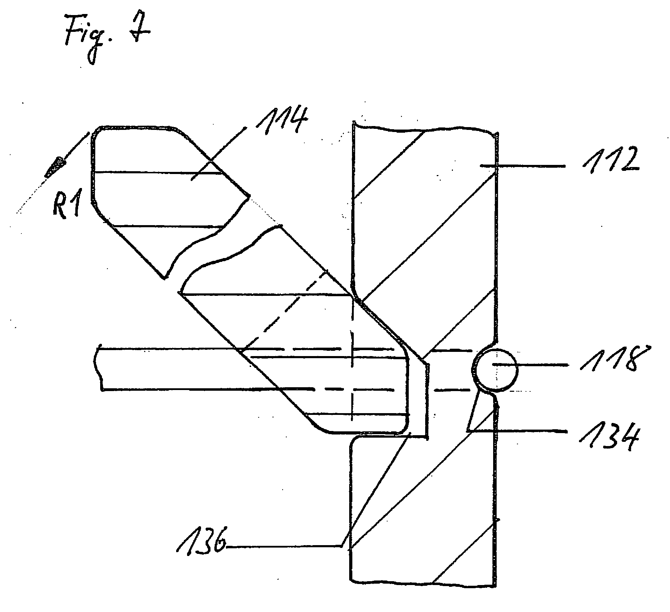

Figur 5 zeigt die zuvor beschriebenen Details in einer Seitenansicht. In Figur 6 ist der rechte Leiterholm 112 abgebildet. Dieser weist, wie der linke Leiterholm, ebenfalls eine äußere Aussparung 134 zur Positionierung des Leiter-Spannrings 118 auf. Die innere Aussparung 136 ist hingegen so gestaltet, dass die Leitersprosse 114 mit ihren angeschrägten Enden nicht nur orthogonal zu den Leiterholmen 110;112 eingebracht werden kann. Das dient der werkzeuglosen Montage der Leiter. Verdeutlicht wir dies in Figur 7.

Dargestellt ist in Figur 7 ein Zusammenbauprinzip der erfindungsgemäßen Leiter 100. Gezeigt ist der rechte Leiterholm 112 in den nach der Positionierung des Leiter-Spannrings 118 um beide Leiterholme 110 und 112 herum die Leitersprosse 114 zunächst in einem Winkel von etwa 45 Grad eingesetzt ist. Entsprechend einer Leitersprossenmontagerichtung R1 wird die Leitersprosse in ihre Zusammenbauposition, waagerecht zu den Leiterholmen 110 und 112, gebracht. Fixiert wird die Leitersprosse in dieser Position, wie in Figur 3 gezeigt, durch die innere Aussparung 132 des linken Leiterholms. Durch die Bewegung aus der 45 Grad-Position in die Waagerechte wird der Leiter-Spannring 118 gespannt. Dieser übt so eine permanente Haltekraft auf die Bauteile aus.

Die Demontage ist wie die Montage ohne Hilfsmittel durchführbar. Dazu wird die Leitersprosse 114 gegen die Haltekraft des Leiter-Spannrings 118 aus der waagerechten Position nach oben heraus aus der inneren Aussparung 132 des linken Leiterholms in eine schräge Position bewegt. Die Aufnahme der Leitersprosse 114 in der inneren Aussparung 136 des rechten Leiterholms dient dabei als Drehpunkt. Die Spannung des Leiter-Spannrings 118 wird damit aufgehoben und die einzelnen Bauteile sind voneinander lösbar.

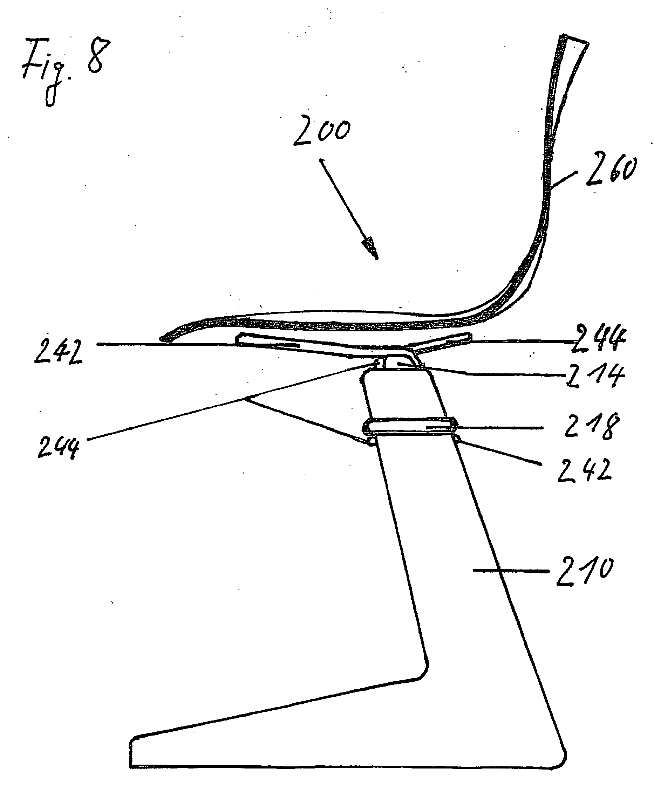

Das erfindungsgemäße Verbindungsprinzip ist auch Teil eines in Figur 8 dargestellten, ohne Hilfsmittel zusammenbaubaren Sitzes 200. Dieser weist als erstes Tragelement eine linke Sitzkufe 210 und als zweites Tragelement eine rechte Sitzkufe 212 auf. Als Stützelement dient hier eine Sitzquerstrebe 214 und als Spannelement ein Kufen-Spannring 218. Zur Aufnahme einer Sitzschale 260 ist der Sitz 200 zudem mit einem vorderen Federbügel 242 und einem hinteren Federbügel 244 versehen.

Die Sitzkufen 210 und 212 weisen jeweils einen unteren, waagerechten Teil zum sicheren Stand auf einem Untergrund und einen oberen, vertikalen Teil zur Erringung einer gewissen Sitzhöhe auf. Es sind jedoch auch andere Kufenformen möglich, beispielsweise symmetrische Formen, mit denen ein selbes Bauteil sowohl als linke Sitzkufe als auch als rechte Sitzkufe verwendet werden kann. Bei dem hier gezeigtem Sitz 200 sind die Sitzkufen 210 und 212 im obern Teil mit dem erfindungsgemäßen Verbindungsprinzip verbunden.

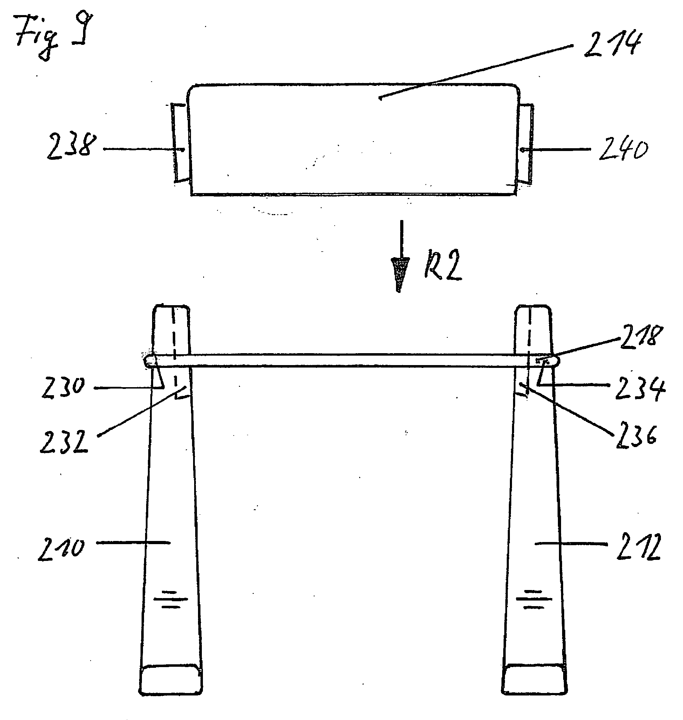

In Figur 9 sind Details dieser Ausführung abgebildet. So weisen die linke Sitzkufe 210 eine äußere Aussparung 230 und die rechte Sitzkufe 212 eine äußere Aussparung 234 zur Positionierung des Kufen-Spannrings 218 auf. An den sich einander zugewandten Seiten weisen die linke Sitzkufe 210 eine innere Aussparung 232 und die rechte Sitzkufe eine innere Aussparung 236 zur Aufnahme der Sitzquerstrebe 214 auf. Entsprechend dazu ist die Sitzquerstrebe 214 mit einer linken und rechten Ausformung 238 und 240 versehen.

Der erfindungsgemäße Sitz kann ohne Werkzeug montiert werden. Dazu ist, wie in Figur 9 zu erkennen, der Kufen-Spannring 218 über die linke und rechte Sitzkufe 210 und 212 in die dafür vorgesehenen äußeren Aussparungen 230;234 der Sitzkufen zu bringen und anschließend die Sitzquerstrebe 214 entlang der Sitzquerstrebenmontagerichtung R2 waagerecht zu den Sitzkufen 210 und 212 zwischen die Sitzkufen zu führen. Dabei wird die linke Ausformung 238 der Sitzquerstrebe 214 in die innere Aussparung 232 der linken Sitzkufe 210 und die rechte Ausformung 240 der Sitzquerstrebe 214 in die innere Aussparung 236 der rechten Sitzkufe geführt. Dabei spannt sich der Kufen-Spannring 218 und übt eine Haltekraft auf die Einzelteile des Sitzes aus. Die Aussparungen 232;236 der Sitzkufen 210;212 und die Ausformungen 238;240 der Sitzquerstrebe 214 sind bezogen auf die Sitzquerstrebenmontagerichtung R2 leicht schräg ausgeformt, sodass der Kufenspannring mit zunehmender Bewegung der Sitzquerstrebe 214 in Richtung R2 zunehmend gespannt wird. Die Sitzquerstrebenmontagerichtung R2 ist dabei gleichzeitig die Hauptbeanspruchungsrichtung des Sitzes während des Gebrauchs.

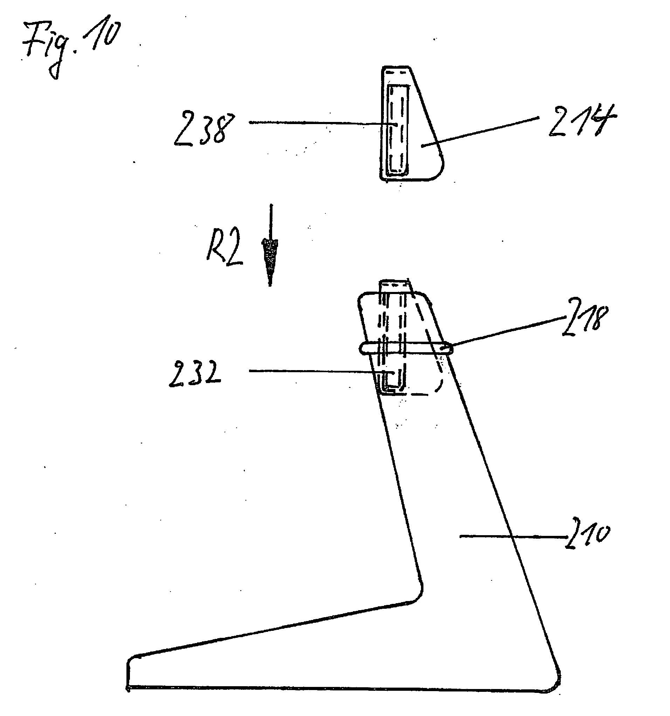

In Figur 10 ist die linke Sitzkufe 210 und die Sitzquerstrebe vor einer Montage in einer Seitenansicht dargestellt. Abweichend von der hier gezeigten Ausführung ist es erfindungsgemäß auch möglich, eine um eine vertikale Achse spiegelsymmetrische Sitzquerstrebe zu verwenden, um die Möglichkeit der Montage der Sitzquerstrebe in zwei Orientierungen zu gewährleisten.

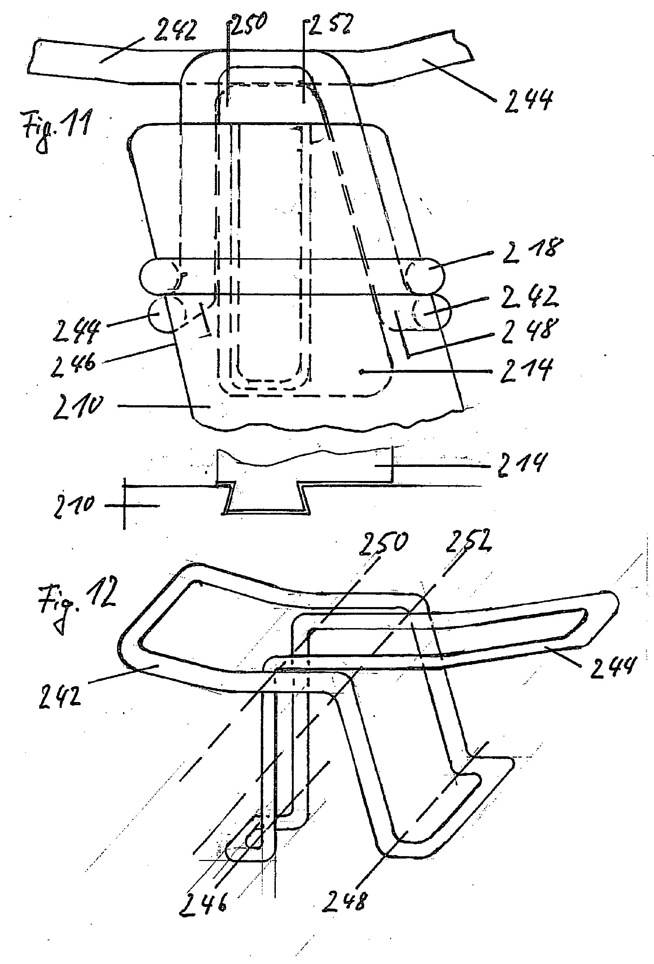

Um die Sitzkufen 210;212 und die Sitzquerstrebe 214 mit der Sitzschale 260 zu verbinden verfügt der erfindungsgemäße Sitz über den vorderen und hinteren Federbügel 242 und 244. Diese werden in den Figuren 11 und 12 näher gezeigt.

Die Federbügel 242 und 244 weisen eine ringförmige geschlossene Geometrie auf. Dabei besitzt einer der Federbügel kleinere Abmaße als der andere, sodass der kleinere der beiden durch den vom größeren eingeschlossenen Raum dringen kann. In der abgebildeten Ausführung weist der vordere Federbügel 242 eine größere Breite als der hintere Federbügel 244 auf. Erfindungsgemäß ist dies auch umgekehrt möglich. Die Federbügel sind, wie in den Figuren 11 und 12 zu erkennen, jeweils entlang zweier Geraden abgekröpft. Mit ihren unteren Abkröpfungen 246 und 248 ragen der hintere und der vordere Federbügel 242 und 244 unter den Kufen-Spannring 218 und mit ihren oberen Abkröpfungen 250 und 252 ragen der vordere Federbügel nach vorne und der hintere Federbügel nach hinten. Die Federbügel bieten so die Möglichkeit die Sitzschale 260 federnd gelagert mit entsprechenden Befestigungsmitteln an der Sitzschale aufzunehmen. Ein leichtes Schaukeln ist so möglich. Zur Positionierung der Federbügel 242;244 kann die Sitzquerstrebe 214 mit Ausformungen versehen sein. Abweichend von der in Figur 8 gezeigten Sitzschale 260, kann der Sitz 200 zudem erfindungsgemäß auch eine Sitzgelegenheit anderer Form, beispielsweise mit Armlehnen, oder ein unteres Sitzteil und ein Rückenlehnenteil getrennt voneinander aufweisen.

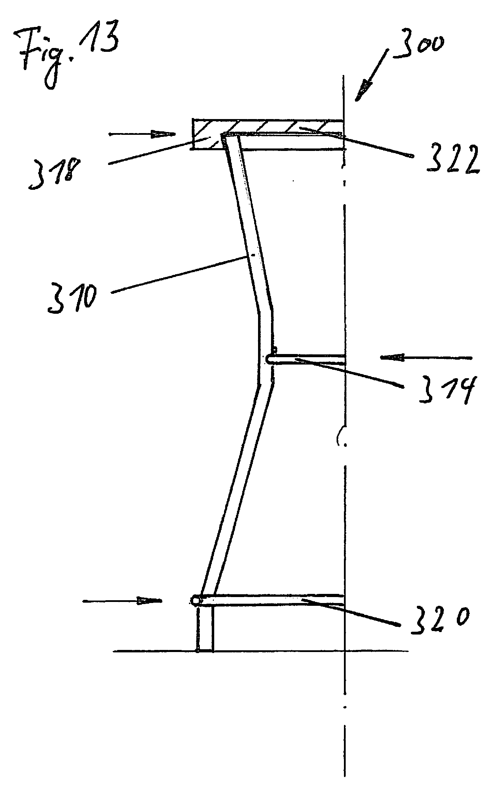

Figur 13 zeigt einen Hocker 300 mit dem erfindungsgemäßen Verbindungsprinzip in einer Schnittdarstellung. Auch der Hocker 300 ist ohne Hilfsmittel montierbar. Er weist als Tragelemente wenigstens drei Hockerbeine 310 auf. Als Stützelement dient hier ein Hockerquerteil 314, als ersten Spannring ein oberer Hocker-Spannring 318 und als zweiten Spannring ein unter Hocker-Spannring 320. Zudem weist der Hocker 300 eine Hockerplatte 322 auf. In der abgebildeten Ausführung ist der obere Hocker-Spannring 318 integriert in die Hockerplatte 322. Erfindungsgemäß ist es auch möglich, das ein Hockerquerteil in eine Hockerplatte integriert ist. Das in der gezeigten Variante verwendete Hockerquerteil 314 kann beispielsweise als Strebe, Platte, Scheibe oder Ring ausgestaltet sein. Die Anzahl der Hockerquerteile und der Hocker-Spannringe kann je nach Ausgestaltung variieren.

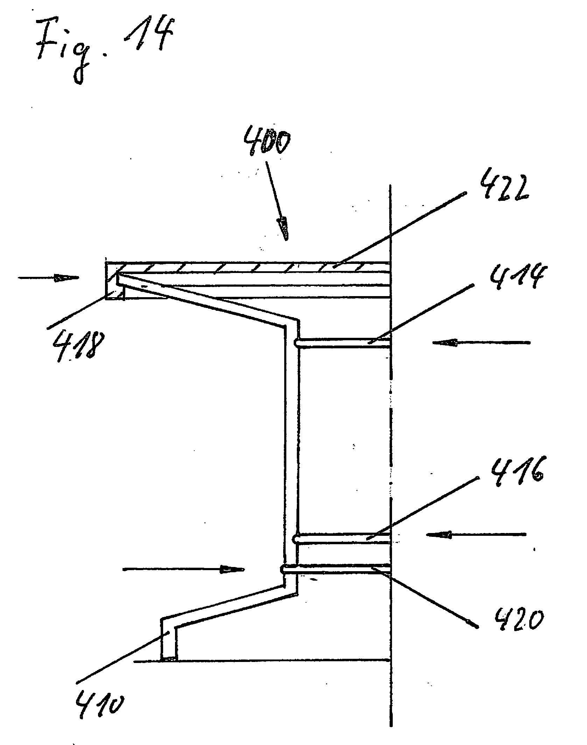

In Figur 14 ist ein Tisch 400 mit dem erfindungsgemäßen Verbindungsprinzip in einer Schnittdarstellung abgebildet. Der Tisch 400 ist ohne Hilfsmittel montierbar. Er weist als Tragelemente wenigstens drei Tischbeine 410 auf. Als erstes Stützelement dient hier eine obere Tischquerstrebe 414 und als zweites Stützelement eine untere Tischquerstrebe 416. Der Tisch 400 weist als ersten Spannring einen oberen Tisch-Spannring 418 und als zweiten Spannring einen unteren Tisch-Spannring 420 auf. Zudem ist der Tisch 400 mit einer Tischplatte 422 versehen. In der abgebildeten Ausführung ist der obere Tisch-Spannring 418 integriert in die Tischplatte 422. Erfindungsgemäß ist es auch möglich, das eine Tischquerstrebe in eine Tischplatte integriert ist. Die Tischquerstreben 414;416 können beispielsweise als Streben, Platten, Scheiben oder Ringe ausgestaltet sein. Die Anzahl der Tischquerstreben und der Tischspannringe kann je nach Ausgestaltung des Tisches variieren.

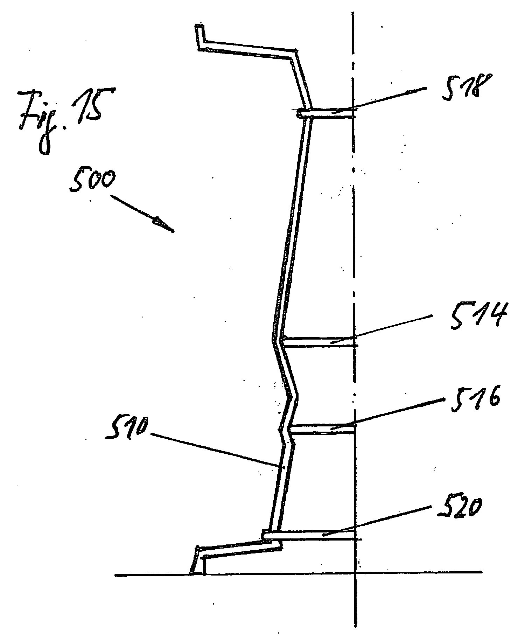

Figur 15 zeigt das erfindungsgemäße Verbindungsprinzip an einer Garderobe 500 in einer Schnittdarstellung. Auch die Garderobe 500 ist ohne Hilfsmittel zusammenbaubar. Sie weist als Tragelemente wenigstens drei Garderobenbeine 510 auf. Als erstes Stützelement dient hier eine obere Garderobenquerstrebe 514 und als zweites Stützelement eine untere Garderobenquerstrebe 516. Die Garderobe 500 weist als ersten Spannring einen oberen Garderoben-Spannring 518 und als zweiten Spannring einen unteren Garderoben-Spannring 520 auf. Die Garderobenquerstreben 514;516 können beispielsweise als Streben, Platten, Scheiben oder Ringe ausgestaltet sein. Die Anzahl der Garderobenquerstreben und der Garderobenspanringe kann je nach Ausgestaltung variieren.

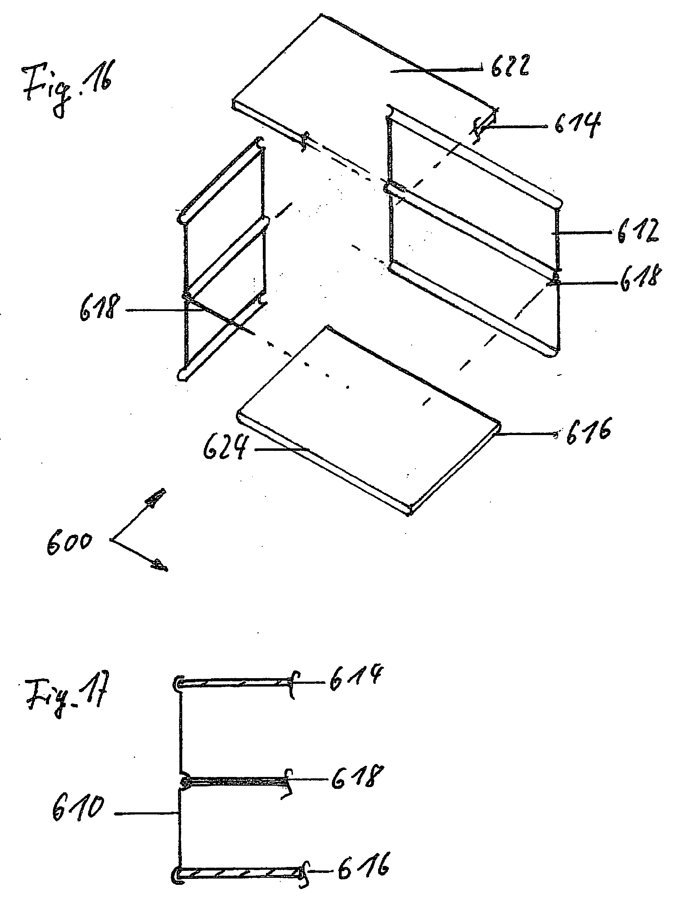

Die Figuren 16 und 17 zeigen ein Behältnis 600 mit dem erfindungsgemäßen Verbindungssystem in einer Explosionsdarstellung. Das Behältnis weist in der Abbildung als erstes Tragelement ein erstes Seitenteil 610 und als zweites Tragelement ein zweites Seitenteil 612 auf. Abhängig von einer Grundform des Behältnisses und von realisierten Zugriffsmöglichkeiten kann die Anzahl der Seitenteile variieren. Mindestens sind es jedoch immer zwei. Zudem besteht die Möglichkeit seitliche Abschnitte mit anderen als den Seitenteilen zu versehen, die in das Verbindungssystem nicht eingebunden sind. Als erstes Stützelement dient bei dem dargestellten Behältnis 600 ein in den Behältnisdeckel 622 integriertes oberes Behältnisquerteil 614 und als zweites Stützelement ein in den Behältnisboden 624 integriertes unteres Behältnisquerteil 616. Erfindungsgemäß ist es auch möglich, die Behältnisquerteile 614;616 nicht in einen Deckel bzw. Boden zu integrieren, um diese Seiten des Behältnisses offen zu lassen. Das dargestellte Behältnis 600 umfasst zudem einen Behältnis-Spannringteil 618 als ersten Spannring. Dieser Behältnis-Spannring 618 kann auch ein Gurt sein. Die Anzahl der Behältnisquerteile und der Behältnis-Spannteile kann je nach Ausgestaltung variieren.
Neben den zuvor aufgeführten Gegenständen kann das erfindungsgemäße Verbindungsprinzip analog zu den bereits genannten Anwendungen auch bei der Konstruktion weiterer Vorrichtungen Verwendung finden, beispielsweise bei Möbeln, Korpussen, Stativen, Schalen, Behältern aller Art, Kleiderständern, Leuchten, Körben und Kästen und vielen mehr.

### Bezugszeichenliste

- 10: Erstes Tragelement
- 12: Zweites Tragelement
- 14: Erstes Stützelement
- 16: Zweites Stützelement
- 18: Erstes Spannelement
- 20: Zweites Spannelement
- 100: Leiter
- 110: Linker Leiterholm
- 112: Rechter Leiterholm
- 114: Leitersprosse
- 118: Spannring der Leiter
- 130: Äußere Aussparung des linken Leiterholms
- 132: Innere Aussparung des linken Leiterholms
- 134: Äußere Aussparung des rechten Leiterholms
- 136: Innere Aussparung des rechten Leiterholms
- 200: Sitz
- 210: Linke Sitzkufe
- 212: Rechte Sitzkufe
- 214: Sitzquerstrebe
- 218: Spannring des Sitzes
- 230: Äußere Aussparung der linken Sitzkufe
- 232: Innere Aussparung der linken Sitzkufe
- 234: Äußere Aussparung der rechten Sitzkufe
- 236: Innere Aussparung der rechten Sitzkufe
- 238: Linke Ausformung der Sitzquerstrebe
- 240: Rechte Ausformung der Sitzquerstrebe
- 242: Vorderer Federbügel
- 244: Hinterer Federbügel
- 246: Untere Abkröpfungen des hinteren Federbügels
- 248: Untere Abkröpfungen des vorderen Federbügels
- 250: Obere Abkröpfungen des hinteren Federbügels
- 252: Obere Abkröpfungen des vorderen Federbügels
- 260: Sitzschale
- 300: Hocker
- 310: Hockerbein
- 314: Hockerquerteil
- 318: Oberer Spannring des Hockers
- 320: Unterer Spannring des Hockers
- 322: Hockerplatte
- 400: Tisch
- 410: Tischbein
- 414: Obere Tischquerstrebe
- 416: Untere Tischquerstrebe
- 418: Oberer Spannring des Tisches
- 420: Unterer Spannring des Tisches
- 422: Tischplatte
- 500: Garderobe
- 510: Garderobenbein
- 514: Obere Garderobenquerstrebe
- 516: Untere Garderobenquerstrebe
- 518: Oberer Spannring der Garderobe
- 520: Unterer Spannring der Garderobe
- 600: Behältnis
- 610: Erstes Seitenteil
- 612: Zweites Seitenteil
- 614: Unteres Behältnisquerteil
- 616: Oberes Behältnisquerteil
- 618: Spannring des Behältnisses
- 622: Behältnisboden
- 624: Behältnisdeckel

- F1: Kraft_1
- F2: Kraft_2
- F3: Kraft_3
- F4: Kraft_4
- F5: Kraft_5
- F6: Kraft_6
- F7: Kraft_7
- F8: Kraft_8
- F9: Kraft_9
- F10: Kraft_10
- F11: Kraft_11
- F12: Kraft_12
- R1: Leitersprossenmontagerichtung
- R2: Sitzquerstrebenmontagerichtung

## Patentansprüche

1. Verbindungssystem mit wenigstens zwei Tragelementen (10;12), wenigstens einem im Wesentlichen orthogonal zu den Tragelementen (10;12) und zwischen den Tragelementen (10;12) angeordneten Stützelement (14;16) und wenigstens einem im wesentlichen parallel zu dem Stützelement (14;16) und um die Tragelemente (10;12) herum angeordneten Spannring (18;20), wobei die Tragelemente (10;12) und das Stützelement (14; 16) und der Spannring (18;20) in der Weise miteinander verbunden sind, dass zumindest eines der Tragelemente (10;12) und/oder das Stützelement (14;16) elastisch verformt ist und damit eine Vorspannung auf das Verbindungssystem ausgeübt ist und das Verbindungssystem gegen ein Verschieben der Tragelemente (10;12) und des Stützelements (14;16) und des Spannrings (18;20) gegeneinander gehemmt ist.

2. Verbindungssystem nach Anspruch 1,
**dadurch gekennzeichnet, dass** die Tragelemente (10;12) Aussparungen zur Aufnahme des Stützelements (14;16) und/oder des Spannrings (18;20) aufweisen, und/oder das Stützelement (14;16) und/oder der Spannring (18;20) Aussparungen zur Aufnahme der Tragelemente (10;12) aufweisen.

3. Verbindungssystem nach Anspruch 1 oder 2,
**dadurch gekennzeichnet, dass** der Spannring (18;20) ein Metallring und das Stützelement (14;16) aus Holz ist.

4. Leiter (100) mit einem Verbindungssystem nach einem der Ansprüche 1 bis 3, wobei zwei Leiterholme (110;112) die Tragelemente sind und wenigstens eine Leitersprosse (114) das Stützelement ist.

5. Leiter (100) nach Anspruch 4,
**dadurch gekennzeichnet, dass** die wenigstens eine Leitersprosse (114) spiegelsymmetrisch an zwei gegenüberliegenden Stirnseiten v-förmig ausgestaltet sind.

6. Leiter (100) nach Anspruch 4 oder 5,
**dadurch gekennzeichnet, dass** die zwei Leiterholme (110; 112) innere Aussparungen (132;136) zur Aufnahme der Leitersprosse (114) und äußere Aussparungen (130;134) zur Aufnahme des Spannrings (118) aufweisen, wobei die innere Aussparung (132) einer der Leiterholme (110;112) so gestaltet ist, dass die Leitersprosse (114) nur im wesentlichen orthogonal zu den Leiterholmen (110;112) in die innere Aussparung (132) einbringbar ist und die innere Aussparung (136) des anderen der Leiterholme (110; 112) so gestaltet ist, dass die Leitersprosse (114) in einem Winkel bis etwa 45 Grad in die innere Aussparung (136) einbringbar ist.

7. Sitz (200) mit einem Verbindungssystem nach einem der Ansprüche 1 bis 3, wobei zwei Sitzkufen (210;212) die Tragelemente sind und wenigstens eine Sitzquerstrebe (214) das Stützelement ist.

8. Sitz (200) nach Anspruch 7,
**dadurch gekennzeichnet, dass** der Sitz (200) Federbügel (242;244) aufweist, an denen eine Sitzschale (260) befestigt ist.

9. Sitz (200) nach Anspruch 7,
**dadurch gekennzeichnet, dass** die Federbügel (242;244) aus Metall sind.

10. Hocker (300) mit einem Verbindungssystem nach einem der Ansprüche 1 bis 3, wobei wenigstens drei Hockerbeine (310) die Tragelemente sind und wenigstens ein Hockerquerteil (314) das Stützelement ist.

11. Hocker (300) nach Anspruch 10,
**dadurch gekennzeichnet, dass** das Hockerquerteil (314) und/oder der Spannring (318) in einer Hockerplatte (322) integriert ist.

12. Tisch (400) mit einem Verbindungssystem nach einem der Ansprüche 1 bis 3 wobei wenigstens drei Tischbeine (410) die Tragelemente sind und wenigstens eine Tischquerstrebe (414) das Stützelement ist.

13. Tisch (400) nach Anspruch 12,
**dadurch gekennzeichnet, dass** die Tischquerstrebe (414) und/oder der Spannring (418) in einer Tischplatte (422) integriert ist.

14. Garderobe (500) mit einem Verbindungssystem nach einem der Ansprüche 1 bis 3, wobei wenigstens drei Garderobenbeine (510) die Tragelemente sind und wenigstens eine Garderobenquerstrebe (514) das Stützelement ist.

15. Behältnis (600) mit einem Verbindungssystem nach einem der Ansprüche 1 bis 3, wobei wenigstens zwei Seitenteile (610;612) die Tragelemente sind und wenigstens ein Behältnisquerteil (614;616) das Stützelement ist.

## Claims

1. A connection system comprising at least two supporting elements (10;12), at least one support member (14;16) arranged substantially perpendicular to the supporting elements (10;12) and between the supporting elements (10;12), and at least one clamping ring (18;20) arranged substantially parallel to the support member (14;16) and around the supporting elements (10;12), wherein the supporting elements (10;12) and the support member (14;16) and the clamping ring (18;20) are connected to one another in such a manner that at least one of the supporting elements (10;12) and/or the support member (14;16) is/are elastically deformed and a preload is thus applied to the connection system and the connection system is impeded against displacement of the supporting elements (10;12) and the support member (14;16) and the clamping ring (18;20) against one another.

2. The connection system according to Claim 1,
**characterised in that** the supporting elements (10; 12) have recesses for receiving the support member (14;16) and/or the clamping ring (18;20), and/or the support member (14;16) and/or the clamping ring (18;20) has/have recesses for receiving the supporting elements (10;12).

3. The connection system according to Claim 1 or 2,
**characterised in that** the clamping ring (18;20) is a metal ring and the support member (14;16) is made of wood.

4. A ladder (100) comprising a connection system according to any one of Claims 1 to 3, wherein two ladder uprights (110; 112) are the supporting elements and at least one ladder rung (114) is the support member.

5. The ladder (100) according to Claim 4,
**characterised in that** the at least one ladder rung (114) is V-shaped mirrorsymmetrically at two opposite ends.

6. The ladder (100) according to Claim 4 or 5,
**characterised in that** the two ladder uprights (110;112) have inner recesses (132;136) for receiving the ladder rung (114) and outer recesses (130;134) for receiving the clamping ring (118), wherein the inner recess (132) of one of the ladder uprights (110;112) is designed such that the ladder rung (114) can only be inserted into the inner recess (132) substantially perpendicular to the ladder uprights (110;112), and the inner recess (136) of the other of the ladder uprights (110;112) is designed such that the ladder rung (114) can be inserted into the inner recess (136) at an angle of up to approximately 45 degrees.

7. A seat (200) comprising a connection system according to any one of Claims 1 to 3, wherein two seat runners (210;212) are the supporting elements and at least one seat cross strut (214) is the support member.

8. The seat (200) according to Claim 7,
**characterised in that** the seat (200) comprises spring clips (242;244), to which a seat pan (260) is fastened.

9. The seat (200) according to Claim 7,
**characterised in that** the spring clips (242;244) are made of metal.

10. A stool (300) comprising a connection system according to any one of Claims 1 to 3, wherein at least three stools legs (310) are the supporting elements and at least one stool cross member (314) is the support member.

11. The stool (300) according to Claim 10,
**characterised in that** the stool cross member (314) and/or the clamping ring (318) is/are integrated into a stool plate (322).

12. A table (400) comprising a connection system according to any one of Claims 1 to 3, wherein at least three table legs (410) are the supporting elements and at least one table cross strut (414) is the support member.

13. The table (400) according to Claim 12,
**characterised in that** the table cross strut (414) and/or the clamping ring (418) is/are integrated into a table top (422).

14. A wardrobe (500) comprising a connection system according to any one of Claims 1 to 3, wherein at least three wardrobe legs (510) are the supporting elements and at least one wardrobe cross strut (514) is the support member.

15. A container (600) comprising a connection system according to any one of Claims 1 to 3, wherein at least two side members (610; 612) are the supporting elements and at least one container cross member (614; 616) is the support member.

## Revendications

1. Système de raccordement avec au moins deux éléments porteurs (10 ; 12), au moins un élément d'appui (14 ; 16) disposé de façon essentiellement orthogonale par rapport aux éléments porteurs (10 ; 12) et entre les éléments porteurs (10 ; 12), et au moins un anneau de serrage (18 ; 20) disposé de façon essentiellement parallèle à l'élément d'appui (14 ; 16) et tout autour des éléments porteurs (10 ; 12), les éléments porteurs (10 ; 12) et l'élément d'appui (14 ; 16) et l'anneau de serrage (18 ; 20) étant raccordés les uns autres de telle sorte qu'au moins un des éléments porteurs (10 ; 12) et/ou l'élément d'appui (14 ; 16) est déformé élastiquement, et de telle sorte qu'une prétension est ainsi exercée sur le système de raccordement et de telle sorte que le système de raccordement est protégé d'un déplacement des éléments porteurs (10 ; 12) et de l'élément d'appui (14 ; 16) et de l'anneau de serrage (18 ; 20) les uns par rapport aux autres.

2. Système de raccordement selon la revendication 1,
**caractérisé en ce que** les éléments porteurs (10 ; 12) présentent des évidements pour loger l'élément d'appui (14 ; 16) et/ou l'anneau de serrage (18 ; 20), et/ou **en ce que** l'élément d'appui (14 ; 16) et/ou l'anneau de serrage (18 ; 20) présentent des évidements pour loger les éléments porteurs (10 ; 12).

3. Système de raccordement selon la revendication 1 ou 2,
**caractérisé en ce que** l'anneau de serrage (18 ; 20) est un anneau métallique et **en ce que** l'élément d'appui (14 ; 16) est en bois.

4. Echelle (100) avec un système de raccordement selon une des revendications 1 à 3,
deux montants d'échelle (110 ; 112) étant les éléments porteurs, et au moins un barreau d'échelle (114) étant l'élément support.

5. Echelle (100) selon la revendication 4,
**caractérisé en ce que** le barreau d'échelle (114) au moins au nombre de un est réalisé en V de façon symétrique en miroir sur deux côtés frontaux opposés.

6. Echelle (100) selon la revendication 4 ou 5,
**caractérisé en ce que** les deux montants d'échelle (110 ; 112) présentent des évidements intérieurs (132 ; 136) pour loger le barreau d'échelle (114) et des évidements extérieurs (130 ; 134) pour loger l'anneau de serrage (118), l'évidement intérieur (132) d'un des montants d'échelle (110 ; 112) étant réalisé de telle sorte que le barreau d'échelle (114) ne peut être mis en place dans l'évidement intérieur (132) que de façon essentiellement orthogonale par rapport aux montants d'échelle (110 ; 112), et **en ce que** l'évidement intérieur (136) de l'autre montant des montants d'échelle (110 ; 112) est réalisé de telle sorte que le barreau d'échelle (114) peut être mis en place dans l'évidement intérieur (136) en formant un angle jusqu'à environ 45 degrés.

7. Siège (200) avec un système de raccordement selon une des revendications 1 à 3,
deux patins de siège (210 ; 212) étant les éléments porteurs et au moins une traverse de siège (214) étant l'élément d'appui.

8. Siège (200) selon la revendication 7,
**caractérisé en ce que** le siège (200) présente des étriers de ressort (242 ; 244) sur lesquels est fixée une coque de siège (260).

9. Siège (200) selon la revendication 7,
**caractérisé en ce que** les étriers de ressort (242 ; 244) sont en métal.

10. Escabeau (300) avec un système de raccordement selon une des revendications 1 à 3,
au moins trois pieds d'escabeau (310) étant les éléments porteurs et au moins une partie transversale d'escabeau (314) étant l'élément d'appui.

11. Escabeau (300) selon la revendication 10,
**caractérisé en ce que** la partie transversale d'escabeau (314) et/ou l'anneau de serrage (318) est intégré(e) dans une plaque d'escabeau (322).

12. Table (400) avec un système de raccordement selon une des revendications 1 à 3,
au moins trois pieds de table (410) étant les éléments porteurs et au moins une traverse de table (414) étant l'élément d'appui.

13. Table (400) selon la revendication 12,
**caractérisée en ce que** la traverse de table (414) et/ou l'anneau de serrage (418) est intégré(e) dans une plaque de table (422).

14. Portemanteau (500) avec un système de raccordement selon une des revendications 1 à 3, au moins trois pieds de portemanteau (510) étant les éléments porteurs et au moins une traverse de portemanteau (514) étant l'élément d'appui.

15. Récipients (600) avec un système de raccordement selon une des revendications 1 à 3, au moins deux parties latérales (610 ; 612) étant les éléments porteurs et au moins une partie transversale de récipient (614 ; 616) étant l'élément d'appui.
